# EUROPEAN PATENT SPECIFICATION

(11) **EP 3 168 390 B1**
(45) Date of publication and mention of the grant of the patent: **27.03.2019**
(21) Application number: 16382492.3
(22) Date of filing: 28.10.2016
(51) Int. Cl.: E04H 12/08, E04H 12/12, E04H 12/20

(54) **STRUCTURE FOR A WIND TURBINE TOWER**
STRUKTUR FÜR EIN WINDRAD
STRUCTURE POUR UNE TOUR D'ÉOLIENNE

(30) Priority: 03.11.2015 ES 201531572
(43) Date of publication of application: 17.05.2017
(73) Proprietor: GRI Renewable Industries, S.L., 28045 Madrid (ES)
(72) Inventor: GALLARDO HERNANDEZ, Rodrigo, 28045 MADRID (ES)
(74) Representative: Herrero & Asociados, S.L.

(56) References cited:
- WO-A1-2014/117231
- JP-A- S6 160 927
- JP-A- 2004 143 920
- US-A1- 2014 237 914

## Description

### Technical Field of the Invention

The present invention relates a structure for a wind turbine tower, having an application in the energy industry, and more specifically in the field of high-rise wind-driven power generators, i.e., those with a wind-driven power generator hub height up to 200 m, which are subjected to particular load conditions that differ from those to which conventional wind-driven power generators are subjected.

### Background of the Invention

Many structural solutions that focus on allowing optimal utilization of wind loads for obtaining electric energy are known in the wind-driven power generator industry.

In most cases, structural support elements of wind-driven power generator nacelles are sized to withstand standard requirements, taking into consideration their location in elevated sites and wind conditions at different times of the year.

However, there are applications in which in order to obtain optimal utilization of the wind energy, it is necessary to locate nacelles at heights exceeding the standard height, this particular scope of application being known as high-rise wind-driven power generators.

Since both the nacelle and the propeller are at a height exceeding the standard height, the requirements to which the structural elements are subjected, including the mast of the wind-driven power generator, also referred to as tower, and its foundation, are obviously substantially greater than those standard applications, so said structural elements must be suitably oversized or be reinforced.

Considering these factors, towers for wind-driven power generators used today are made from steel and have base diameters of no less than 5 m, or mixed steel and concrete structures in which the foundation of the tower is considerable, for the purpose of withstanding a high turning moment.

In addition to the foregoing, these solutions often include the arrangement of a plurality of reinforcement guy-wires around the mast, which allows, depending on the direction from which the wind load comes, the corresponding guy-wires to work under traction, collaborating in increasing the strength of the entire structure.

Some solutions of this type comprising the arrangement of guy-wires around the tower are described in the German utility model application no. DE-202012100446-U1 and European patent applications no. EP-2525093-A2 and no. EP-2444663-A2. US2014/237914A1, JPS6160927A, WO2014/117231A1 and JP2004143920A disclose further structures according to the state of the art usable for carrying wind turbines.

Therefore, taking into account the oversizing that structural elements of wind-driven power generators require today for high-rise applications, with the excess cost this involves, compared to wind-driven power generators for conventional applications, it must be concluded that structures of this type are susceptible to being improved and optimized.

### Description of the Invention

The present invention relates to a structure for a wind turbine tower according to claim 1, particularly for high-rise applications, that allows reducing the dimensions of the central body at ground level, maintaining the height of the tower, and reducing the necessary foundation, furthermore allowing a modular on-site completion, all of which results in greater production flexibility, a reduction in on-site completion times, and therefore a reduction in completion costs for the entire structure.

The structure proposed by the invention comprises an elongated central body extending according to a first direction from ground level to a terminal end.

According to the invention, the structure comprises at least three satellite bodies, preferably having a smaller section than the central body, where each satellite body extends from ground level, separated from the central body, according to a direction substantially parallel to the first direction, up to a height that is less than that of the terminal end of the central body. Said satellites are attached to the central body at not more than 3/5 the total height of the tower.

Said at least three satellite bodies are distributed radially around the central body with respect to the first direction, such that each satellite body is linked with the central body by means of an upper connection running between said central body and an upper end of said satellite body.

The central body is thereby formed as a tower column or mast, and according to the invention it can even have diameter dimensions at its base, at ground level that are less than 5 m, even 3.5 m. The satellite bodies having a smaller diameter are placed against the central body, separated from the central body, but attached to said central body by upper attachments or connections

Therefore, unlike the solutions using guy-wires of the state of the art, the structure of the invention does not have guy-wires. Guy-wires only work under traction and, since they are cables, offer no compressive strength. However, the satellite bodies of the structure of the invention work under traction and compression, so they allow transmission of the axial stress the central body withstands, which is not possible in the case of solutions using guy-wires.

Furthermore, the foundation does not have to be sized for such a high turning moment as in the case of solutions using guy-wires, taking into account the better distribution of loads and the reduction in structure weight with respect to the solutions of the state of the art. Furthermore, the tower does not have to be made from concrete to withstand the requirements to which solutions using guy-wires are subjected.

On the other hand, the invention has advantages from the production viewpoint, given that considering the reduction in the required dimensions, current production flows are not disrupted, since smaller diameters in the order of 4.6 m can be produced, while the required diameters in the case of towers today are 6 or 7 m.

The possibility that each satellite body is additionally linked to the central body by means of at least one intermediate connection running between said central body and said satellite body, and is located between the ground level and the upper connection, thereby achieving an improved distribution of loads, is contemplated.

It is also contemplated that the cross section of the central body decreases from the upper connection area with the upper ends of the satellite bodies both towards the terminal end and towards the ground level.

This configuration can be reached, given the moment diagram, in what could be defined as an inverted taper from the ground level area to the area corresponding to the upper connections. It is also contemplated that the section of the satellite bodies is a decreasing section, i.e., they have an inverted taper.

The structure of the invention can be assembled in-field in a modular manner, making the assembly of the central body independent from the satellite bodies. Each of the satellite bodies can thereby be completely pre-assembled at ground level so it can be later lifted and coupled to the central body, whether by means of welding or bolted attachments.

### Description of the Drawings

To complement the description that is being made and for the purpose of helping to better understand the features of the invention according to a preferred practical embodiment thereof, a set of drawings is attached as an integral part of said description, in which the following is depicted with an illustrative and nonlimiting character:
Figure 1 shows a schematic perspective view of a preferred embodiment of a structure for a high-rise wind turbine tower according to the invention, which comprises four satellite bodies.
Figure 2 shows a perspective view of a detail of the area at ground level and of the satellite bodies of the embodiment depicted in the preceding figures.
Figure 3 shows a perspective view of a detail of the area corresponding to the bypass part and the upper connections between the satellite bodies and the central body of the embodiment depicted in the preceding figures.
Figure 4 shows a perspective view of a detail of the area corresponding to the intermediate connections between the satellite bodies and the central body of the embodiment depicted in the preceding figures.
Figure 5 shows three schematic plan views of three different embodiments of the structure of the invention, in which view A depicts a structure with four satellite bodies, like the one depicted in the preceding figures, view B depicts a structure with eight satellite bodies located at a different radial distance from the center of the central body, while view C depicts a structure with three uniformly distributed satellite bodies.

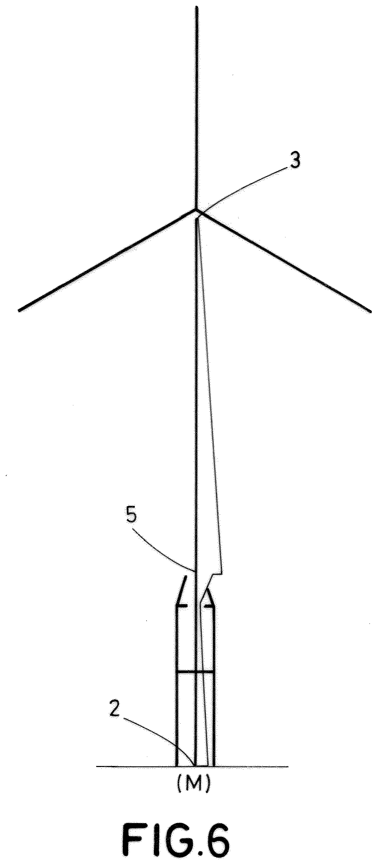

Figure 6 shows a bending moment diagram of the structure of the invention, in which it can be seen how said diagram is split into two parts defined based on the upper connections of the satellite bodies, which allows reducing the foundation given that the turning moment is significantly lower compared to conventional solutions, in which the diagram would not be split into two, or to solutions using guy-wires, in which the guy-wires only work under traction and not under traction and compression, as in the case of the satellite bodies of the invention.

### Preferred Embodiment of the Invention

In view of the mentioned drawings, it can be seen how in one of the possible embodiments of the invention, the structure proposed by the invention comprises an elongated central body (1) extending according to a first direction from ground level (2) to a terminal end (3).

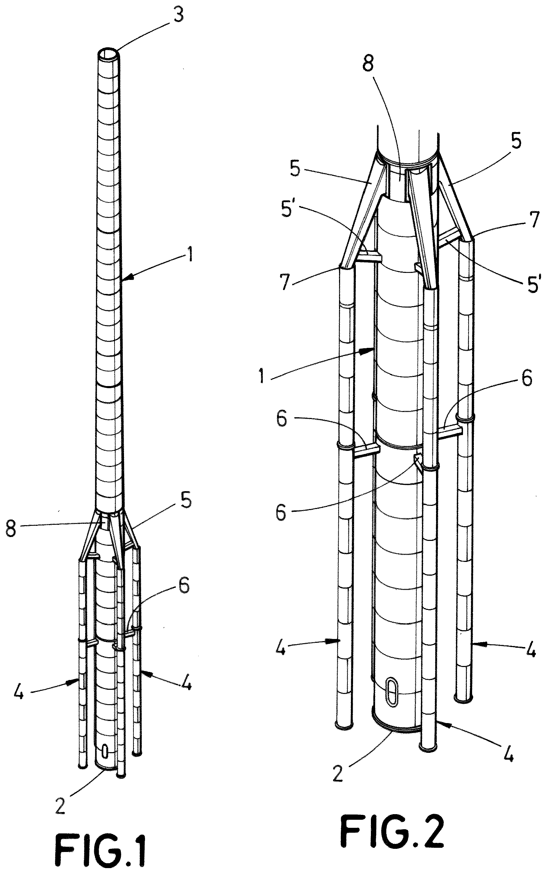

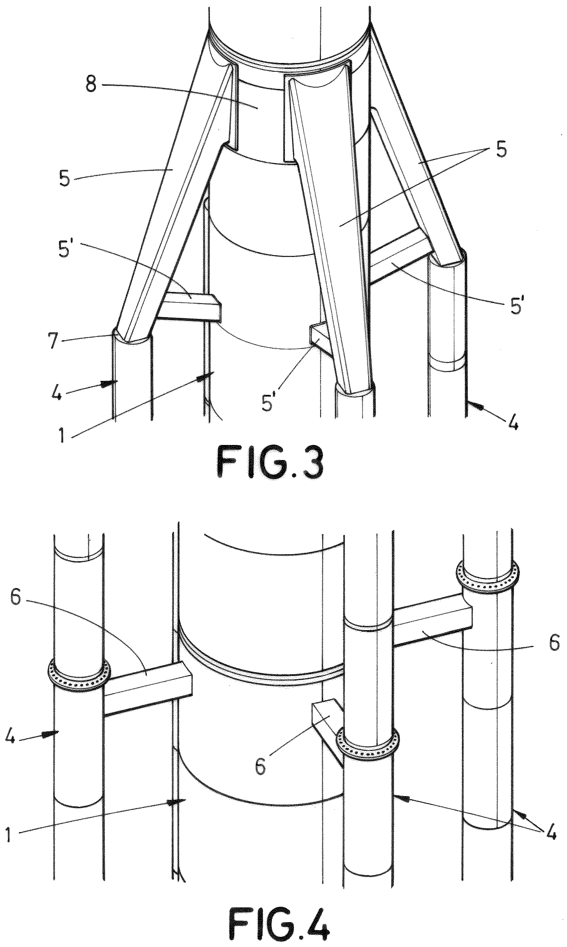

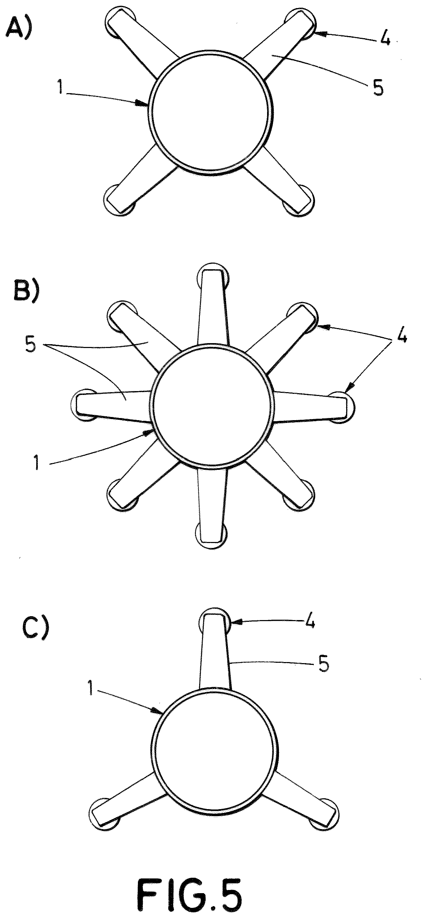

The structure depicted in Figures 1-4 and in view A of Figure 5 comprises four satellite bodies (4) having a smaller section than the central body (1), where each satellite body (4) extends from ground level (2), separated from the central body (1), according to a direction substantially parallel to the first direction, up to a height that is less than that of the terminal end (3) of the central body (1).

Said satellite bodies (4) are distributed radially around the central body (1) with respect to the first direction, such that each satellite body (4) is linked with the central body (1) by means of an upper connection (5) running between said central body (1) and an upper end (7) of said satellite body (4).

The upper connections (5) are attached to the central body (1) in a bypass part (8); furthermore, in the depicted embodiment one auxiliary upper connection (5') is arranged for each satellite body (4), resulting in an improved distribution of loads.

In turn, each satellite body (4) is linked to the central body (1) by means of an intermediate connection (6) running between said central body (1) and said satellite body (4), and is located between the ground level (2) and the upper connection (5), thereby achieving an improved distribution of loads.

According to a preferred embodiment, at least one body (2, 4), preferably all of them, comprises steel. In other words, they are made from steel. The satellite bodies (4) can be manufactured by means of coiled tubing manufacturing techniques, which is a much less expensive manufacturing technology than that of the central body (1), which is obtained by sheet metal forming processes.

Nevertheless, it is also contemplated that at least one body (2, 4) comprises concrete.

Furthermore, it is contemplated that at least one connection (5, 6) comprises welding, preferably electric arc welding with protection against gas.

If the bodies (2, 4) are made from concrete, it is contemplated that at least one connection (5, 6) comprises elements selected from pre-tensioning elements, post-tensioning elements and assembly bolts, or a combination thereof, as well as flanges.

In the embodiment depicted in Figures 1 to 4, the bodies (2, 4) comprise a plurality of metal parts or components attached or coupled to one another by means of an alignment of holes through which assembly bolts are assembled, allowing them to be assembled and removed.

If the bodies (2, 4) are made from concrete, it is contemplated that the bodies (2, 4) comprise a plurality of components or parts attached or coupled to one another by means of holes through which tensioning elements injected with mortar are assembled.

The central body (1) can have a circular section, like in the depicted embodiment, or a trapezoidal section comprised, at ground level (2) at the base, in a diametrical circumference of not more than 7 m.

Likewise, the satellite bodies (4) have a circular section, trapezoidal section or a combination of both, and are preferably uniformly distributed radially around the central body (1) with respect to the first direction.

According to the invention, the cross section of each satellite body (4) is smaller than the cross section of the central body (1).

In view of this description and set of drawings, the person skilled in the art will understand that the embodiments of the invention that have been described can be combined in many ways within the scope of the invention , as appended in the claims. The invention has been described according to several preferred embodiments thereof, but it will be obvious for the person skilled that a number of variations can be introduced in said preferred embodiments without exceeding the scope of the claimed invention, as appended in the claims.

## Claims

1. Structure for a wind turbine tower comprising an elongated central body (1) extending according to a first direction from ground level (2) to a terminal end (3), the structure comprising at least three satellite bodies (4), each of which extends from ground level (2), separated from the central body (1), according to a direction parallel to the first direction, up to a height that is less than that of the terminal end (3) of the central body (1), where said at least three satellite bodies (4) are distributed radially around the central body (1) with respect to the first direction, and where each satellite body (4) is linked with the central body (1) by means of an upper connection (5) running between said central body (1) and an upper end (7) of said satellite body (4), wherein the cross section of each satellite body (4) is smaller than the cross section of the central body (1), **characterized in that** the cross section of the central body (1) decreases from the upper connection area (5) with the upper ends (7) of the satellite bodies (4) both towards the terminal end (3) and towards the ground level (2).

2. Structure according to claim 1, wherein each satellite body (4) is additionally linked to the central body (1) by means of at least one intermediate connection (6) running between said central body (1) and said satellite body (4).

3. Structure according to any of the preceding claims, wherein at least one body (2, 4) comprises steel.

4. Structure according to any of the preceding claims, wherein at least one body (2, 4) comprises concrete.

5. Structure according to any of the preceding claims, wherein at least one connection (5, 6) comprises welding.

6. Structure according to any of the preceding claims, wherein at least one connection (5, 6) comprises elements selected from pre-tensioning elements, post-tensioning elements and assembly bolts, or a combination thereof.

7. Structure according to any of claims 3 to 6, wherein the bodies (2, 4) comprise a plurality of metal parts attached to one another by means of an alignment of holes through which assembly bolts are assembled.

8. Structure according to any of claims 4 to 7, wherein the bodies (2, 4) comprise a plurality of parts attached to one another by means of holes through which tensioning elements injected with mortar are assembled.

9. Structure according to any of the preceding claims, wherein the central body (1) has a circular or trapezoidal section comprised, at ground level (2), in a diametrical circumference of not more than 7 m.

10. Structure according to any of the preceding claims, wherein the satellite bodies (4) have a circular section, trapezoidal section or a combination of both, and are uniformly distributed radially around the central body (1) with respect to the first direction.

11. Structure according to any of the preceding claims, wherein the central body (1) and the satellite bodies (4) have a modular configuration, the central body (1) being independent from the satellite bodies (4).

## Patentansprüche

1. Aufbau für einen Windturbinenturm, umfassend einen länglichen Zentralkörper (1), der sich gemäß einer ersten Richtung von dem Bodenniveau (2) zu einem Anschlussende (3) erstreckt, wobei der Aufbau mindestens drei Satellitenkörper (4) umfasst, von denen sich jeder von dem Bodenniveau (2) getrennt von dem Zentralkörper (1) gemäß einer Richtung parallel zur ersten Richtung bis zu einer Höhe erstreckt, die kleiner als die des Anschlussendes (3) des Zentralkörpers (1) ist, wobei die mindestens drei Satellitenkörper (4) radial um den Zentralkörper (1) in Bezug auf die erste Richtung verteilt sind, und wobei jeder Satellitenkörper (4) mit dem Zentralkörper (1) über eine obere Verbindung (5) verbunden ist, die zwischen dem Zentralkörper (1) und einem oberen Ende (7) des Satellitenkörpers (4) verläuft, wobei der Querschnitt jedes Satellitenkörpers (4) kleiner als der Querschnitt des Zentralkörpers (1) ist, **dadurch gekennzeichnet, dass** der Querschnitt des Zentralkörpers (1) von dem oberen Verbindungsbereich (5) mit den oberen Enden (7) der Satellitenkörper (4) sowohl zu dem Anschlussende (3) als auch zu dem Bodenniveau (2) hin abnimmt.

2. Aufbau nach Anspruch 1, wobei jeder Satellitenkörper (4) zusätzlich mit dem Zentralkörper (1) über mindestens eine Zwischenverbindung (6) verbunden ist, die zwischen dem Zentralkörper (1) und dem Satellitenkörper (4) verläuft.

3. Aufbau nach einem der vorhergehenden Ansprüche, wobei mindestens ein Körper (2, 4) Stahl umfasst.

4. Aufbau nach einem der vorhergehenden Ansprüche, wobei mindestens ein Körper (2, 4) Beton umfasst.

5. Aufbau nach einem der vorhergehenden Ansprüche, wobei mindestens eine Verbindung (5, 6) ein Schweißen umfasst.

6. Aufbau nach einem der vorhergehenden Ansprüche, wobei mindestens eine Verbindung (5, 6) Elemente umfasst, die aus Vorspannelementen, Nachspannelementen und Montageschrauben oder einer Kombination derselben ausgewählt sind.

7. Aufbau nach einem der Ansprüche 3 bis 6, wobei die Körper (2, 4) eine Vielzahl von Metallteilen umfassen, die mittels einer Ausrichtung von Löchern, durch die Montageschrauben montiert sind, aneinander befestigt sind.

8. Aufbau nach einem der Ansprüche 4 bis 7, wobei die Körper (2, 4) eine Vielzahl von Teilen umfassen, die mittels von Löchern aneinander befestigt sind, durch die mit Mörtel eingespritzte Spannelemente montiert sind.

9. Aufbau nach einem der vorhergehenden Ansprüche, wobei der Zentralkörper (1) einen kreisförmigen oder trapezförmigen Abschnitt aufweist, der auf Bodenniveau (2) einen diametralen Umfang von nicht mehr als 7 m umfasst.

10. Aufbau nach einem der vorhergehenden Ansprüche, wobei die Satellitenkörper (4) einen kreisförmigen Querschnitt, einen trapezförmigen Querschnitt oder eine Kombination aus beidem aufweisen und gleichmäßig radial um den Zentralkörper (1) in Bezug auf die erste Richtung verteilt sind.

11. Aufbau nach einem der vorhergehenden Ansprüche, wobei der Zentralkörper (1) und die Satellitenkörper (4) eine modulare Konfiguration aufweisen, wobei der Zentralkörper (1) unabhängig von den Satellitenkörpern (4) ist.

## Revendications

1. Structure pour un mât d'éolienne comprenant un corps central allongé (1) s'étendant selon une première direction à partir du niveau du sol (2) jusqu'à une extrémité terminale (3), la structure comprenant au moins trois corps satellites (4), chacun d'eux s'étendant à partir du niveau du sol (2), séparé du corps central (1), selon une direction parallèle à la première direction, jusqu'à une hauteur qui est inférieure à celle de l'extrémité terminale (3) du corps central (1), où lesdits au moins trois corps satellites (4) sont répartis de façon radiale autour du corps central (1) par rapport à la première direction, et où chaque corps satellite (4) est lié au corps central (1) au moyen d'un raccordement supérieur (5) courant entre ledit corps central (1) et une extrémité supérieure (7) dudit corps satellite (4), dans laquelle la section transversale de chaque corps satellite (4) est plus petite que la section transversale du corps central (1),
**caractérisée en ce que**
la section transversale du corps central (1) diminue à partir de la surface de raccordement supérieure (5) avec les extrémités supérieures (7) des corps satellites (4) tant vers l'extrémité terminale (3) que vers le niveau du sol (2).

2. Structure selon la revendication 1, dans laquelle chaque corps satellite (4) est de plus lié au corps central (1) au moyen d'au moins un raccordement intermédiaire (6) courant entre ledit corps central (1) et ledit corps satellite (4).

3. Structure selon l'une quelconque des revendications précédentes, dans laquelle au moins un corps (2, 4) comprend de l'acier.

4. Structure selon l'une quelconque des revendications précédentes, dans laquelle au moins un corps (2, 4) comprend du béton.

5. Structure selon l'une quelconque des revendications précédentes, dans laquelle au moins un raccordement (5, 6) est constitué par soudage.

6. Structure selon l'une quelconque des revendications précédentes, dans laquelle au moins un raccordement (5, 6) comprend des éléments sélectionnés parmi des éléments de précontrainte, des éléments des éléments de post-contrainte et des boulons d'assemblage, ou une combinaison de ceux-ci.

7. Structure selon l'une quelconque des revendications 3 à 6, dans laquelle les corps (2, 4) comprennent une pluralité de parties métalliques attachées les unes aux autres au moyen d'un alignement de trous à travers lesquels des boulons d'assemblage sont assemblés.

8. Structure selon l'une quelconque des revendications 4 à 7, dans laquelle les corps (2, 4) comprennent une pluralité de parties attachées les unes aux autres au moyen de trous à travers lesquels des éléments de contrainte injectés avec du mortier sont assemblés.

9. Structure selon l'une quelconque des revendications précédentes, dans laquelle le corps central (1) a une section circulaire ou trapézoïdale comprise, au niveau du sol (2), dans une circonférence diamétrale de pas plus de 7 m.

10. Structure selon l'une quelconque des revendications précédentes, dans lequel les corps satellites (4) ont une section circulaire, une section trapézoïdale ou une combinaison des deux, et sont uniformément répartis de façon radiale autour du corps central (1) par rapport à la première direction.

11. Structure selon l'une quelconque des revendications précédentes, dans laquelle le corps central (1) et les corps satellites (4) ont une configuration modulaire, le corps central (1) étant indépendant des corps satellites (4).
